# EUROPÄISCHE PATENTSCHRIFT

(11) **EP 1 493 951 B1**
(45) Veröffentlichungstag und Bekanntmachung des Hinweises auf die Patenterteilung: **19.12.2007**
(21) Anmeldenummer: 04004659.1
(22) Anmeldetag: 01.03.2004
(51) Int. Cl.: F16K 1/226, F02D 9/04, F01N 3/20, F16K 11/052, F16K 1/20

(54) **Klappenventil**
Butterfly valve
Vanne papillon

(30) Priorität: 30.06.2003 DE 10329336
(43) Veröffentlichungstag der Anmeldung: 05.01.2005
(73) Patentinhaber: Friedrich Boysen GmbH & Co. KG, 72213 Altensteig (DE)
(72) Erfinder: Wellner, Friedrich, 72202 Nagold (DE); Stockinger, Karl, 72224 Ebhausen-Rotfelden (DE); Lang, Christoph, 72213 Altenstein-Warth (DE)
(74) Vertreter: Manitz, Finsterwald & Partner GbR

(56) Entgegenhaltungen:
- DE-A- 3 707 904
- DE-A- 4 305 123
- DE-A- 10 006 795
- DE-A1- 1 945 483
- DE-A1- 10 249 448
- US-A- 4 877 339
- US-A- 5 410 876
- US-A- 5 632 304

## Beschreibung

Die vorliegende Erfindung betrifft ein Klappenventil, insbesondere zur Verwendung im Heißbereich von Abgasanlagen für Verbrennungsmotoren.

Klappenventile werden bei Abgasanlagen für Verbrennungsmotoren insbesondere eingesetzt, um den Abgasgegendruck motorabhängig zu regeln, beispielsweise abhängig von der Drehzahl. Zum Teil werden sie aber auch dafür eingesetzt, zwei Zweige einer Abgasanlage alternativ zu beaufschlagen oder um Teile der Abgasanlage, beispielsweise bestimmte Schalldämpferbereiche zeitweise zu verschließen.

Derartige Klappenventile müssen nach außen abgedichtet werden, damit keine Abgase unkontrolliert nach außen dringen. Besonders wichtig ist eine Abdichtung, wenn ein derartiges Klappenventil vor einem Abgaskatalysator eingesetzt wird, insbesondere im Heißbereich von Abgasanlagen, da dort die Abgase zumindest noch nicht vollständig gereinigt sind.

Ein Klappenventil gemäß dem Oberbegriff von Anspruch 1 ist aus der US-A-5,632,304 bekannt. Bei diesem Klappenventil wird die Dichtung mit der Verschlussklappe stets vollständig mitgedreht.

Der Erfindung liegt die Aufgabe zugrunde, ein Klappenventil der eingangs genannten Art anzugeben, dessen äußere Dichtheit verbessert ist. Insbesondere soll eine Abdichtung erreicht werden, die einen Einsatz des Klappenventils auch im Heißbereich von Abgasanlagen ermöglicht.

Diese Aufgabe wird durch ein Klappenventil mit den Merkmalen von Anspruch 1 gelöst.

Durch das teilweise Mitdrehen der gegen das Gehäuse und/oder gegen das Drehübertragungsmittel gedrängten Dichtung beim Verdrehen der Verschlussklappe reibt die Dichtung auf dem Gehäuse und/oder dem Drehübertragungsmittel, wodurch die gegeneinander gedrängten Elemente aufeinander eingeschliffen werden. Hierdurch wird die Dichtwirkung der Dichtung mit der Zeit immer größer. Dabei kann die Dichtung auch herstellerseitig durch Ausführen einer bestimmten Anzahl von Drehungen voreingeschliffen werden.

Um ein Mitdrehen der Dichtung nur um einen Teilwinkel zu verwirklichen, kann nach einer Ausgestaltung der Erfindung ein drehfest mit der Verschlussklappe verbundener Mitnehmer vorgesehen sein, der in eine Winkelausnehmung in der Dichtung eingreift. Die Größe der Winkelausnehmung bestimmt den Winkelbereich, über welchen die Dichtung nicht mit der Verschlussklappe mitdreht.

Nach einer anderen Ausgestaltung der Erfindung sind die Mittel so ausgebildet, dass das Mitdrehen der Dichtung nur in einer Richtung erfolgt. Dies ist insbesondere dann vorteilhaft, wenn die Dichtung sowohl gegen das Gehäuse als auch gegen das Drehübertragungsmittel gedrängt wird. In der einen Drehrichtung werden dadurch die Dichtung und das Gehäuse, und in der anderen Richtung die Dichtung und das Drehübertragungsmittel aufeinander eingeschliffen.

Um ein Mitdrehen der Dichtung nur in einer Richtung zu erreichen, kann zwischen Verschlussklappe, insbesondere zwischen Drehübertragungsmittel, und Dichtung eine Art Rätschensystem vorgesehen sein. In der einen Drehrichtung stehen die beiden Elemente dadurch miteinander in Eingriff, so dass die Dichtung mitdreht, während in der umgekehrten Richtung kein Eingriff gegeben ist, so dass die Dichtung nicht mitdreht.

Nach einer weiteren Ausgestaltung der Erfindung ist das Federmittel als Schraubendruckfeder ausgebildet und stützt sich beidseits in einem Federtopf ab, wobei Mitnehmer vorgesehen sind, durch welche die Federtöpfe beim Verdrehen der Verschlussklappe mitgedreht werden. Durch diese Ausgestaltung kann gewährleistet werden, dass die Schraubendruckfeder nicht aufgedreht wird und sich dadurch die Federkraft ändert, was insbesondere dann passieren kann, wenn sich die Dichtung nur in einer Drehrichtung mitdreht.

Nach einer weiteren Ausgestaltung der Erfindung ist die Dichtung zugleich als Gleitlager zur axialen und/oder radialen Lagerung der Verschlussklappe ausgebildet. Durch diese Doppel- bzw. Dreifachfunktion der Dichtung können separate Lagermittel eingespart werden.

Bevorzugt weist das Drehübertragungsmittel im Bereich der Durchführung durch die Gehäuseöffnung einen Absatz auf und wird die Dichtung sowohl gegen den Rand der Gehäuseöffnung als auch gegen diesen Absatz gedrängt. Dadurch kann einerseits eine gute Abdichtung gewährleistet und andererseits eine Axiallagerung für das Drehübertragungsmittel und damit für die Verschlussklappe verwirklicht werden.

Besonders bevorzugt ist es, wenn der Absatz eine zur Drehachse der Verschlussklappe geneigte, ringförmige Außenumfangsfläche aufweist. Durch eine solche, in Art eines Kegelstumpfmantels ausgebildete Außenumfangsfläche des Absatzes kann zusätzlich zur axialen Lagerung auch eine radiale Lagerung des Drehübertragungsmittels und damit der Verschlussklappe in vorteilhafter Weise verwirklicht werden.

Nach einer weiteren Ausgestaltung der Erfindung ist auch auf der Seite der Verschlussklappe, die der Öffnung im Gehäuse abgewandt ist, ein Gleitlager für die Verschlussklappe vorgesehen. Dadurch kann die Lagerung der Verschlussklappe weiter verbessert werden.

Besonders bevorzugt ist es, wenn Federmittel vorgesehen sind, durch welche beide Gleitlager gegen die Verschlussklappe bzw. das Drehübertragungsmittel gedrängt werden. Durch diese Ausgestaltung, die auch unabhängig beansprucht wird, kann eine schwimmende Lagerung der Verschlussklappe im Gehäuse erreicht werden. Dadurch können insbesondere Längenausdehnungen der Verschlussklappe und/oder des Drehübertragungsmittels vorteilhaft ausgeglichen werden.

Bevorzugt weisen dabei die auf der Seite der Öffnung im Gehäuse angeordneten Federmittel eine größere Vorspannung auf als die auf der anderen Seite angeordneten Federmittel. Hierdurch wird sichergestellt, dass die Dichtung auf der Seite der Öffnung im Gehäuse auch bei einer Längenänderung des Drehübertragungsmittels oder der Verschlussklappe stets gegen das Gehäuse und/oder das Drehübertragungsmittel angepresst bleibt. Eine zeitweise Undichtigkeit des Klappenventils kann dadurch vermieden werden.

Nach einer weiteren Ausgestaltung der Erfindung ist mindestens ein Federmittel als Schraubenfeder ausgebildet, deren freier Innendurchmesser größer ist als der Außendurchmesser des zugeordneten Gleitlagers und die sich auf Seiten des Gleitlagers auf einem nach außen weisenden Rand eines Federtopfes abstützt, welcher das Gleitlager aufnimmt. Durch diese Ausgestaltung kann die Höhe der Schraubenfeder vergrößert werden, ohne die Gesamthöhe des Klappenventils zu vergrößern.

Nach einer weiteren Ausgestaltung der Erfindung, die sich auf Klappenventile mit zwei alternativ zu verschließenden Einlass- und/oder Auslassöffnungen bezieht, weist die Verschlussklappe zwei einen Winkel miteinander einschließende Flügel auf, die je einer Ein- oder Auslassöffnung zugeordnet sind. Hierdurch kann der erforderliche Drehwinkel zum alternativen Schließen der einen oder der anderen Ein- oder Auslassöffnung vorteilhaft verringert werden.

Bevorzugt ist es dabei, wenn die beiden Flügel der Verschlussklappe einen Winkel kleiner 90°, insbesondere ca. 70°, miteinander einschließen. Der erforderliche Drehwinkel kann dadurch weiter verkleinert werden.

Weiter bevorzugt ist es, wenn die zu verschließenden Öffnungen jeweils durch das Ende eines in das Gehäuse geführten Rohres gebildet sind und wenn die Öffnungsflächen der beiden Rohre einen Winkel miteinander einschließen, der doppelt so groß ist wie der von den beiden Flügeln der Verschlussklappen eingeschlossene Winkel. Damit ist eine vorteilhafte Konstruktion des Klappenventils möglich.

Um eine übermäßige Beeinträchtigung der beiden Flügel der Verschlussklappe durch Abgase zu verhindern, kann nach einer weiteren Ausgestaltung der Erfindung in Strömungsrichtung vor der Verschlussklappe ein Strömungsabweiselement angeordnet sein. Die Schmalseite des jeweils nicht schließenden Flügels der Verschlussklappe befindet sich dadurch im Strömungsschatten des Abweiselements und wird so geschützt.

Das Gehäuse des erfindungsgemäßen Klappenventils kann aus Feinguss, aus Blechschalen und/oder durch Innenhochdruckumformen hergestellt sein. Jede dieser Varianten hat für sich Vorteile.

Die Lager des erfindungsgemäßen Klappenventils bestehen bevorzugt aus Sinterkeramik. Als besonders vorteilhaft hat sich Siliciumcarbid herausgestellt.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: eine Draufsicht auf ein erfindungsgemäßes Klappenventil,
- Fig. 2: einen Schnitt gemäß Linie A-A in Fig. 1,
- Fig. 3: einen Schnitt gemäß Linie B-B in Fig. 2,
- Fig. 4: eine Draufsicht auf eine Dichtung eines erfindungsgemäßen Klappenventils und
- Fig. 5: einen Schnitt gemäß Linie C-C in Fig. 4.

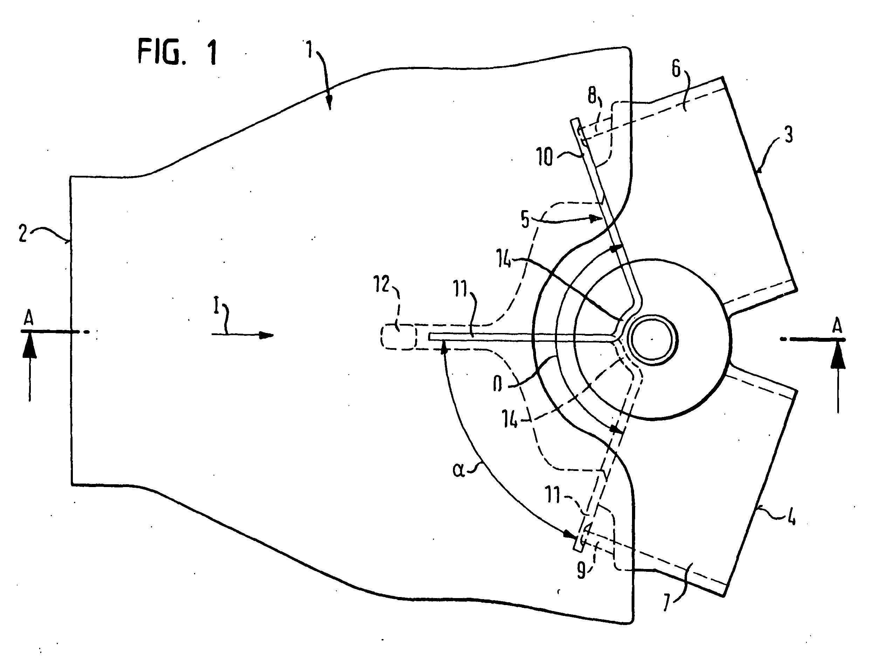

Das in den Figuren 1 bis 3 dargestellte Klappenventil umfasst ein zwei Halbschalen 1a und 1b aufweisendes Gehäuse 1 mit einer Fluideinlassöffnung 2 und zwei Fluidauslassöffnungen 3, 4. Im Gehäuse 1 ist eine Verschlussklappe 5 zwischen einer ersten Stellung, in welcher sie die eine Fluidauslassöffnung 3 verschließt, während die andere Fluidauslassöffnung 4 geöffnet ist, und einer zweiten Stellung, in welcher sie die zweite Fluidauslassöffnung 4 verschließt, während die erste Fluidauslassöffnung 3 geöffnet ist, drehbar gelagert. Ein derartiges Klappenventil kann beispielsweise in einer Abgasanlage eines Kraftfahrzeuges zur Umschaltung zwischen zwei alternativen Abgaswegen, beispielsweise einem Weg mit Abgaskühlung und einem Weg ohne Abgaskühlung, eingesetzt werden.

Wie man insbesondere in Figur 1 erkennt, werden die beiden Fluidaustrittsöffnungen 3 und 4 durch zwei Rohrstutzen 6, 7 gebildet, deren eines Ende 8, 9 in das Innere des Gehäuses 1 ragt. Des Weiteren erkennt man in Figur 1, dass die Verschlussklappe 5 zwei Flügel 10, 11 aufweist, die einen Winkel α von 70° miteinander einschließen. Dementsprechend weisen die Öffnungsflächen der Enden 8, 9 der Rohre 6, 7 einen Winkel β zueinander von 140° auf. Dadurch genügt ein Verdrehen der Verschlussklappe 5 um 70°, um alternativ das Ende 8 des einen Rohrstutzens 6 mit dem einen Flügel 10 oder das Ende 9 des anderen Rohres 7 mit dem zweiten Flügel 11 zu verschließen. In Figur 1 ist die das Ende 8 des öberen Rohres 6 verschießende Stellung der Verschlussklappe 5 mit durchgezogenen Linien und die das andere Rohrende 9 verschließende Stellung mit gestrichelten Linien dargestellt.

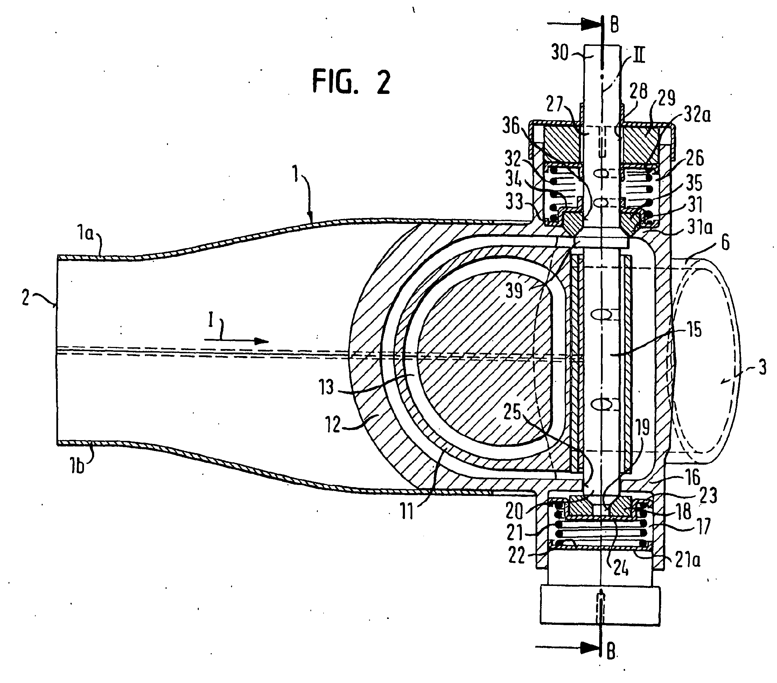

Wie man weiterhin in Figur 1 sieht und auch leicht nachvollziehen kann, befindet sich der Flügel 10 oder 11, der gerade kein Rohrende 8, 9 verschließt, in einer Stellung, in welcher die Flügelebene im Wesentlichen parallel zur Strömungsrichtung I des Fluids verläuft. Um bei heißen Abgasen zu vermeiden, dass diese die Schmalseiten der Flügel 10, 11 der Verschlussklappe 5 in Mitleidenschaft ziehen, ist in Strömungsrichtung I vor der Verschlussklappe 5 ein Schutzbügel 12 vorgesehen, der um den gerade nicht schließenden Flügel 10 oder 11 der Verschlussklappe 5 mit geringem Abstand herumgeführt ist. Dies ist insbesondere in Figur 2 gut erkennbar. In Figur 2 ist außerdem erkennbar, dass die Flügel 10 und 11 auf ihrer dem zugehörigen Rohrende 8, 9 zugewandten Seite jeweils eine Nut 13 aufweisen, die derart ausgebildet und angeordnet ist, dass sie bei entsprechendem Drehen der Verschlusskappe 5 das zugehörige Rohrende 8, 9 aufnehmen kann. Durch diese Ausgestaltung wird die innere Dichtheit des Klappventils vorteilhaft erhöht, da die Nut 13 zusammen mit den Rohrenden 8, 9 jeweils eine Art Labyrinth bildet. Zusätzlich ist die innere Dichtheit auch dadurch verbessert, dass die Fluidströmung eine Kraft in Schließrichtung auf die Verschlussklappe 5 ausübt.

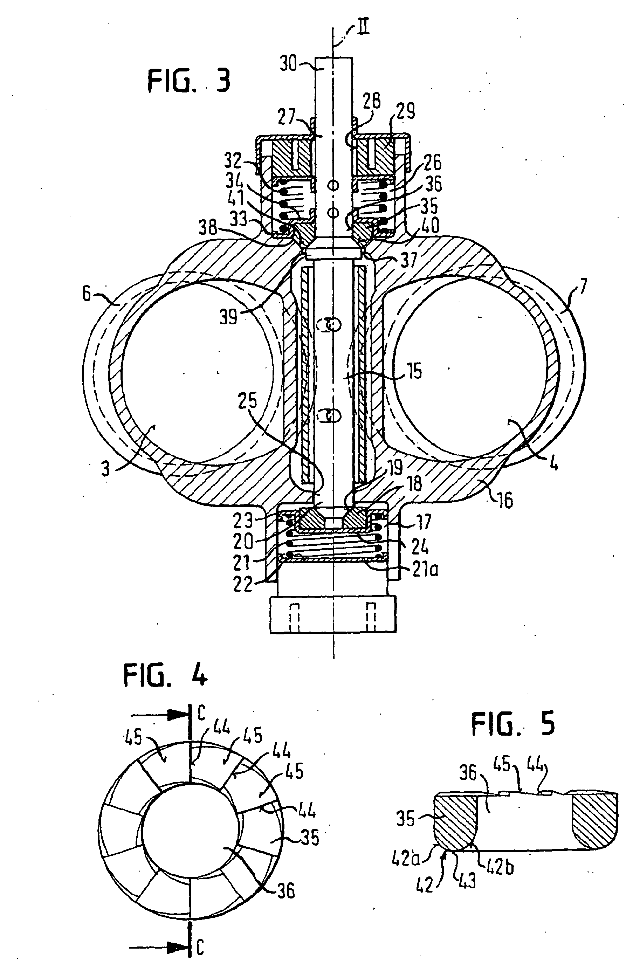

Die Lagerung der Verschlussklappe 5 ist insbesondere den Figuren 2 und 3 zu entnehmen. Die beiden Flügel 10 und 11 der Verschlussklappe 5 sind mit einem Verbindungssteg 14 mit einer Welle 15 drehfest verbunden. Die Welle 15 durchsetzt ein Feingussteil 16, welches zusammen mit den Rohrstutzen 6, 7 einstückig ausgebildet ist. Auf der in den Figuren 2 und 3 unteren Seite weist das Feingussteil 16 einen Lagerraum 17 auf, in welchem ein Gleitlagerring 18 angeordnet ist. In die sich zur Welle 15 weitende Öffnung 19 des Gleitlagerrings 18 greift ein Ende 20 der Welle 15, welches sich entsprechend der Öffnung 19 verjüngt.

In dem Lagerraum 17 befindet sich des Weiteren eine Schraubendruckfeder 21, die sich einerseits über einen Federtopf 21a am Boden 22 des Lagerraums 17 und andererseits an dem nach außen weisenden Rand 23 eines Federtopfes 24 abstützt, der den Gleitlagerring 18 aufnimmt. Die Welle 15 greift durch eine Öffnung 25 mit ihrem Ende 20 in den Lagerraum 17. Der Lagerraum 17 ist ansonsten vollständig verschlossen.

Auf der in den Figuren 2 und 3 oberen Seite weist das Feingussteil 16 ebenfalls einen Lagerraum 26 auf. Die Welle 15 durchsetzt mit ihrem oberen Teil 27 den Lagerraum 26 vollständig und ist durch eine Öffnung 28 in der oberen Wand 29 des Lagerraums 26 nach außen geführt. Über das außen liegende Ende 30 der Welle 15 ist diese betätigbar. Zur Durchführung der Welle 15 durch den oberen Lagerraum 26 ist außerdem eine Öffnung 31 im Boden 31a des Lagerraumes 26 vorgesehen.

Auch im oberen Lagerraum 26 ist eine Schraubendruckfeder 32 angeordnet, die sich einerseits über einen Federtopf 32a an der oberen Wand 29 des Lagerraums 26 und andererseits an einem nach außen weisenden Rand 33 eines Federtopfes 34 abstützt. Im Federtopf 34 ist ein weiterer Gleitlagerring 35 aufgenommen, dessen Ringöffnung 36 von der Welle 15 durchgriffen wird. Der Innendurchmesser des oberen Gleitlagerrings 35 ist etwas größer als der Außendurchmesser der Welle 15. Er befindet sich daher im Bereich des Ringspaltes 37 zwischen der Welle 15 und der Durchtrittsöffnung 31 im Boden 31a des oberen Lagerraumes 26.

Von der Schraubendruckfeder 32 wird der obere Gleitlagerring 35 sowohl gegen den Rand 38 der Öffnung 31 als auch gegen einen in diesem Bereich an der Welle 15 vorgesehen Absatz 39 gepresst. Der Absatz 39 ist mit einer zum oberen Gleitlagerring 35 weisenden, gegenüber der Drehachse II der Welle 15 geneigten, schrägen Ringfläche 40 ausgebildet. Ebenso ist der Rand 38 der Öffnung 31 mit einer gegenüber der Drehachse II der Welle 15 geneigten, zum oberen Gleitlagerring 35 weisenden, schrägen Ringfläche 41 ausgebildet. Der obere Gleitlagerring 35 selbst weist auf seiner den beiden Ringflächen 40 und 41 zugewandten Seite eine Rundung 42 auf, wobei die Scheitellinie 43 der Rundung in etwa dem Spalt 37 gegenüberliegt. Die äußere Hälfte 42a der Rundung 42 stützt sich dadurch auf der schrägen Ringfläche 41 des Randes 38 der Öffnung 31 ab, die innere Hälfte 42b der Rundung 42 auf der schrägen Ringfläche 40 des Absatzes 39 der Welle 15.

Durch die beiden einander entgegenwirkenden Schraubendruckfedern 21 und 32 ist die Welle 15 somit schwimmend gelagert. Darüber hinaus bewirkt die beschriebene Ausgestaltung, dass der obere Gleitlagerring 35 zugleich als Dichtung der Durchführung der Welle 15 nach außen wirkt. Um ein Abheben des oberen Gleitlagerrings 35 und damit ein Undichtwerden bei Längenänderungen der Welle 15 aufgrund von Temperaturänderungen zu verhindern, weist die obere Schraubendruckfeder 32 eine größere Vorspannung auf als die untere Schraubendruckfeder 21. Die Dichtwirkung des oberen Gleitlagerrings 35 bleibt dadurch auch bei Temperaturänderüngen erhalten.

Zwischen dem oberen Gleitlagerring 35 und der Welle 15 ist ein Kupplungssystem vorhanden, durch welches der obere Gleitlagerring 35 beim Verdrehen der Welle 15 teilweise mitgenommen wird. Dabei kann es sich beispielsweise um einen an der Welle 15 angeordneten Mitnehmer handeln, der in eine Winkelausnehmung des oberen Gleitlagerrings 35 greift und dadurch eine Mitnahme des Ringes 35 nur über einen Teilwinkel der Wellendrehung bewirkt. Eine andere Möglichkeit ist eine Art Rätschensystem, bei welchem der obere Gleitlagerring 35 nur in einer Drehrichtung von der Welle 15 mitgenommen wird. Hierfür kann, wie in den Figuren 4 und 5 dargestellt, die dem Absatz 39 der Welle 15 abgewandte Seite des oberen Gleitlagerrings 35 mit mehreren kreisförmig angeordneten, in einer Drehrichtung weisenden Kanten 44 und in umgekehrter Drehrichtung daran anschließenden Auflaufschrägen 45 versehen sein. Durch ein entsprechendes mit der Welle 15 drehfest verbundenes Rastelement, welches hier nicht dargestellt ist, kann eine Mitnahme des oberen Gleitlagerrings 35 in der in Figur 4 mit Pfeil III gekennzeichneten Drehrichtung erreicht werden, während bei der mit Pfeil IV gekennzeichneten umgekehrten Drehrichtung keine Mitnahme des oberen Gleitlagerrings 35 erfolgt.

Durch die teilweise Mitnahme des oberen Gleitlagerrings 35 wird erreicht, dass sich dieser sowohl gegenüber dem Rand 38 der Durchtrittsöffnung 31 als auch gegenüber dem Absatz 39 der Welle 15 verdreht. Da der obere Gleitlagerring 35 durch die Schraubendruckfeder 32 sowohl gegen den Rand 38 als auch gegen den Absatz 39 gedrängt wird, werden sowohl der obere Gleitlagerring 35 und der Rand 39 als auch der obere Gleitlagerring 35 und der Absatz 39 aufeinander eingeschliffen. Hierdurch wird die Dichtwirkung des Gleitlagerrings 35 verbessert. Ein Einschleifen kann dabei werkseitig erfolgen, um von Anfang an eine hohe Dichtigkeit zu gewährleisten. Während des Betriebs kann eine aufgrund Ermüdung der Schraubendruckfeder 32 möglicherweise auftretende nachlassende Dichtheit zumindest teilweise durch dieses Einschleifen ausgeglichen werden.

Neben dem Mitnehmer oder dem Rätschensystem für den oberen Gleitlagerring 35 sind zwei weitere Mitnehmer an der Welle 15 drehfest angeordnet, die auf den oberen Federtopf 34 und den für das andere Ende der Schraubendruckfeder 32 vorgesehenen Federteller 32a wirken. Durch diese Ausgestaltung kann verhindert werden, dass sich die Schraubendruckfeder 32 aufdreht, wenn der obere Gleitlagerring 35 von der Welle 15 mitgenommen wird.

Das erfindungsgemäße Klappenventil kann, wie dargestellt, mit einem Gehäuse 1 mit zwei Halbschalen 1a und 1b sowie einem Feingussteil 16 hergestellt werden. Ebenso ist aber auch eine Herstellung durch Innenhochdruckumformen oder in anderer Weise möglich. Durch die erfindungsgemäße Ausgestaltung wird in jedem Falle ein hohe äußere Dichtheit des Klappenventils erreicht. Zudem ist auch die innere Dichtheit aufgrund der dargestellten Ausgestaltung besonders gut. Weitere Vorteile bieten die schwimmende Lagerung der Welle 15 und der Schutz der Flügel 10, 11 der Verschlussklappe 5 durch den Bügel 12.

### Bezugszeichenliste

- 1: Gehäuse
- 1a: Halbschale
- 1b: Halbschale
- 2: Fluideintrittsöffnung
- 3: Fluidaustrittsöffnung
- 4: Fluidaustrittsöffnung
- 5: Verschlussklappe
- 6: Rohrstutzen
- 7: Rohrstutzen
- 8: Ende von 6
- 9: Ende von 7
- 10: Flügel
- 11: Flügel
- 12: Schutzbügel
- 13: Nut
- 14: Verbindungssteg
- 15: Welle
- 16: Feingussteil
- 17: unterer Lagerraum
- 18: Gleitlagerring
- 19: Öffnung von 18
- 20: Ende von 15
- 21: Schraubendruckfeder
- 21 a: Federtopf
- 22: Boden von 17
- 23: Rand

- 24: Federtopf
- 25: Durchtrittsöffnung
- 26: oberer Lagerraum
- 27: oberer Teil von 15
- 28: Durchtrittsöffnung
- 29: obere Wand von 26
- 30: oberes Ende von 15
- 31: Durchtrittsöffnung
- 31a: Boden von 26
- 32: Schraubendruckfeder
- 32a: Federtopf
- 33: Rand
- 34: Federtopf
- 35: oberer Gleitlagerring und Dichtung
- 36: Öffnung von 35
- 37: Ringspalt
- 38: Rand von 31
- 39: Absatz
- 40: Ringfläche
- 41: Ringfläche
- 42: Rundung
- 42a: äußere Hälfte von 42
- 42b: innere Hälfte von 42
- 43: Scheitellinie
- 44: Kante
- 45: Auflaufschräge
- I: Strömungsrichtung
- II: Drehachse von 15
- III: erste Drehrichtung von 15
- IV: zweite Drehrichtung von 15
- α: Winkel
- β: Winkel

## Patentansprüche

1. Klappenventil, insbesondere zur Verwendung im Heißbereich von Abgasanlagen für Verbrennungsmotoren, mit einem Gehäuse (1) mit mindestens einer Fluideinlassöffnung (2) und mindestens einer Fluidauslassöffnung (3, 4), einer im Gehäuse (1) drehbar angeordneten Verschlussklappe (5), die über ein durch eine Öffnung (31) einer Wand (31a) des Gehäuses (1) geführtes Drehübertragungsmittel (15) mit einem außerhalb des Gehäuses (1) vorgesehenen Betätigungselement drehfest verbunden ist, und einer Dichtung (35) zur Abdichtung des Gehäuseinneren nach außen im Bereich der Durchführung des Drehübertragungsmittels (15) durch die Öffnung (31) in der Gehäusewand (31a), wobei erste Mittel (32), insbesondere Federmittel, vorgesehen sind, durch welche die Dichtung (35) gegen das Gehäuse und/oder gegen das Drehübertragungsmittel (15) gedrängt wird, sowie zweite Mittel (44), durch welche die Dichtung (35) beim Verdrehen der Verschlussklappe (5) zumindest teilweise mitgedreht wird, **dadurch gekennzeichnet,**
**dass** die zweiten Mittel (44) so ausgebildet sind, dass die Dichtung (35) bei jeder Drehung um einen bestimmten Winkel mitgedreht wird, der kleiner ist als der Gesamtdrehwinkel der Verschlussklappe (5), wobei bevorzugt ein drehfest mit der Verschlussklappe (5) verbundener Mitnehmer vorgesehen ist, der in eine Winkelausnehmung in der Dichtung (35) greift, und/oder dass die zweiten Mittel (44) so ausgebildet sind, **dass** die Dichtung (35) nur in einer Richtung (III) mitgedreht wird, wobei bevorzugt zwischen Verschlussklappe (5) bzw. Drehübertragungsmittel (15) und Dichtung (35) eine Art Rätschensystem (44, 45) vorgesehen ist.

2. Klappenventil nach Anspruch 1,
**dadurch gekennzeichnet,**
**dass** das Federmittel (32) als Schraubenfeder ausgebildet ist und sich beidseits in einem Federtopf (32a, 34) abstützt, und dass Mitnehmer vorgesehen sind, durch welche die Federtöpfe (32a, 34) beim Verdrehen der Verschlussklappe (5) mitgedreht werden

3. Klappenventil nach einem der vorhergehenden Ansprüche,
**dadurch gekennzeichnet,**
**dass** die Dichtung (35) zugleich als Gleitlager zur axialen und/oder radialen Lagerung der Verschlussklappe (5) ausgebildet ist.

4. Klappenventil nach einem der vorhergehenden Ansprüche,
**dadurch gekennzeichnet,**
**dass** das Drehübertragungsmittel (15) im Bereich der Durchführung durch die Gehäuseöffnung (31) einen Absatz (39) aufweist und dass die Dichtung (35) sowohl gegen den Rand (38) der Gehäuseöffnung (31) als auch gegen diesen Absatz (39) gedrängt wird, wobei der Absatz (39) bevorzugt eine zur Drehachse (II) der Verschlussklappe (5) geneigte, ringförmige Außenumfangsfläche (40) aufweist

5. Klappenventil nach einem der vorhergehenden Ansprüche,
**dadurch gekennzeichnet,**
**dass** auch auf der Seite der Verschlussklappe (5), die der Öffnung (31) im Gehäuse abgewandt ist, ein Gleitlager (18) für die Verschlussklappe vorgesehen ist.

6. Klappenventil nach einem der vorhergehenden Ansprüche mit zwei auf voneinander abgewandten Seiten der Verschlussklappe (5) angeordneten, zumindest auch axial in Richtung der Drehachse (II) der Verschlussklappe (5) wirkenden Gleitlagern (18, 35),
**dadurch gekennzeichnet,**
**dass** Federmittel (21, 32) vorgesehen sind, durch welche beide Gleitlager (18, 35) gegen die Verschlussklappe (5) bzw. das Drehübertragungsmittel (15) gedrängt werden, wobei bevorzugt die auf der Seite der Öffnung (31) im Gehäuse (1) angeordneten Federmittel (32) eine größere Vorspannung aufweisen als die auf der anderen Seite angeordneten Federmittel (21), und/oder ebenfalls bevorzugt mindestens ein Federmittel (21, 32) als Schraubenfeder ausgebildet ist, deren freier Innendurchmesser größer ist als der Außendurchmesser des zugeordneten Gleitlagers (18, 35) und die sich auf Seiten des Gleitlagers (18, 35) auf einem nach außen weisenden Rand (23, 33) eines Federtopfes (24, 34) abstützt, der das Gleitlager (18, 35) aufnimmt.

7. Klappenventil nach einem der vorhergehenden Ansprüche,
**dadurch gekennzeichnet,**
**dass** die Verschlussklappe (5) zwei einen Winkel (α) miteinander einschließende Flügel (10, 11) aufweist, die je einer Ein- oder Auslassöffnung (3, 4) zugeordnet sind.

8. Klappenventil nach Anspruch 7,
**dadurch gekennzeichnet,**
**dass** die beiden Flügel (10, 11) der Verschlussklappe (5) einen Winkel (α) kleiner 90°, insbesondere ca. 70° miteinander einschließen, und/oder dass in Strömungsrichtung (I) vor der Verschlussklappe (5) ein Strömungsabweiselement (12) angeordnet ist.

9. Klappenventil nach einem der vorhergehenden Ansprüche,
**dadurch gekennzeichnet,**
**dass** die zu verschließende Öffnung oder die zu verschließenden Öffnungen (3, 4) jeweils durch das Ende (8, 9) eines in das Gehäuse (1) geführten Rohres (6, 7) gebildet sind, und/oder dass die Öffnungsflächen der Rohrenden (8, 9) einen Winkel (β) miteinander einschließen, der doppelt so groß ist wie der von den beiden Flügeln (10, 11) der Verschlussklappe (5) eingeschlossene Winkel (α), wobei in beiden Fällen bevorzugt die Verschlussklappe (5) oder deren Flügel (10, 11) auf ihrer dem Rohrende (8, 9) zugewandten Seite jeweils eine Nut (13) aufweisen, die so angeordnet und ausgebildet ist, dass sie das Rohrende (8, 9) beim Schließen aufnimmt.

10. Klappenventil nach einem der Ansprüche 3 order 6,
**dadurch gekennzeichnet,**
**dass** das Gehäuse (1) aus Feinguss, Blechschalen und/oder durch Innenhochdruckumformen hergestellt ist, und/oder dass mindestens eines der Gleitlager (18, 35) aus Sinterkeramik, insbesondere Siliciumcarbid besteht.

## Claims

1. A flap valve, in particular for use in the hot zone of exhaust gas systems for internal combustion engines, comprising a housing (1) having at least one fluid inlet opening (2) and at least one fluid outlet opening (3, 4), a closing flap (5) which is arranged rotationally in the housing (1) and is rotationally fixedly connected to an actuation element provided outside the housing (1) via a rotary transmission means (15) guided through an opening (31) of a wall (31a) of the housing (1), and a seal (35) for the sealing of the housing interior toward the outside in the region of the leadthrough of the rotary transmission means (15) through the opening (1) in the housing wall (31a), with first means (32), in particular spring means, being provided by which the seal (35) is urged against the housing and/or against the rotary transmission means (15), as well as second means (44) by which the seal (35) is at least partly turned on the rotation of the closing flap (5),
**characterised in that**
the second means (44) are configured such that the seal (35) is turned by a specific angle on every rotation, said angle being smaller than the total rotary angle of the closing flap (5), with a catch being provided which is preferably rotationally fixedly connected to the closing flap (5) and which engages into an angular cut-out in the seal (35); and/or **in that** the second means (44) are configured such that the seal (35) is only turned in one direction (III), with a type of ratchet system (44, 45) preferably being provided between the closing flap (5) or the rotary transmission means (15) and the seal (35).

2. A flap valve in accordance with claim 1, **characterised in that** the spring means (32) is made as a coil spring and is supported at both sides in a spring retainer (32a, 34); and **in that** catches (46, 47) are provided by which the spring retainers (32a, 34) are turned on the rotation of the closing flap (5).

3. A flap valve in accordance with any one of the preceding claims, **characterised in that** the seal (35) is simultaneously made as a plain bearing for the axial and/or radial support of the closing flap (5).

4. A flap valve in accordance with any one of the preceding claims, **characterised in that** the rotary transmission means (15) has a step (39) in the region of the leadthrough through the housing opening (31); and **in that** the seal (35) is urged both against the rim (38) of the housing opening (31) and against said step (39), with said step (39) preferably having a ring-shaped external peripheral surface (40) inclined with respect to the axis of rotation (II) of the closing flap (5).

5. A flap valve in accordance with any one of the preceding claims, **characterised in that** a plain bearing (18) for the closing flap is also provided at the side of the closing flap (5) remote from the opening (31) in the housing.

6. A flap valve in accordance with any one of the preceding claims, comprising two plain bearings (18, 35) arranged at mutually remote sides of the closing flap (5) and also acting at least axially in the direction of the axis of rotation (II) of the closing flap (5),
**characterised in that**
spring means (21, 32) are provided by which both plain bearings (18, 35) are urged against the closing flap (5) or the rotary transmission means (15), with the spring means (32) arranged at the side of the opening (31) in the housing (1) preferably having a larger bias than the spring means (21) arranged at the other side; and/or **in that** at least one spring means (21, 32) is likewise preferably formed as a coil spring whose free internal diameter is larger than the external diameter of the associated plain bearing (18, 35) and which is supported at sides of the plain bearing (18, 35) on a rim (23, 33) of a spring retainer (24, 34) facing outwardly, said spring retainer receiving the plain bearing (18, 35).

7. A flap valve in accordance with any one of the preceding claims, **characterised in that** the closing flap (5) has two wings (10, 11) which include an angle (α) with one another and which are associated with an inlet opening or outlet opening (3, 4) each.

8. A flap valve in accordance with claim 7, **characterised in that** the two wings (10, 11) of the closing flap (5) include an angle (α) with one another of less than 90°, in particular approximately 70°; and/or **in that** a flow deflection element (12) is arranged in front of the closing flap (5) in the flow direction (I).

9. A flap valve in accordance with any one of the preceding claims, **characterised in that** the opening or openings to be closed (3, 4) are each formed by the end (8, 9) of a tube (6, 7) guided into the housing (1); and/or **in that** the opening surfaces of the tube ends (8, 9) include an angle (β) with one another which is twice as large as the angle (α) included by the two wings (10, 11) of the closing flap (5), with the closing flap (5) or its wings (10, 11) in both cases preferably having a respective groove (13) at its/their side remote from the tube end (8, 9), said groove being arranged and made such that it accepts the tube end (8, 9) on closing.

10. A flap valve in accordance with claim 3 or claim 6, **characterised in that** the housing (1) is manufactured from a precision casting, sheet metal shells and/or by internal high pressure shaping; and/or **in that** at least one of the plain bearings (18, 35) is made from a sintered ceramic material, in particular silicon carbide.

## Revendications

1. Vanne à clapet, en particulier destinée à être utilisée dans la zone chaude de systèmes d'échappement pour des moteurs à combustion, comportant un boîtier (1) avec au moins une ouverture d'admission de fluide (2) et au moins une ouverture de sortie de fluide (3, 4), un clapet de fermeture (5) agencé rotatif dans le boîtier (1), qui est relié solidaire en rotation avec un élément d'actionnement prévu à l'extérieur du boîtier (1), via un moyen de transmission de rotation (15) guidé à travers une ouverture (31) d'une paroi (31a) du boîtier (1), et comportant un joint (35) pour étancher l'intérieur du boîtier vis-à-vis de l'extérieur dans la zone du passage du moyen de transmission de rotation (15) à travers l'ouverture (31) dans la paroi de boîtier (31a), et il est prévu des premiers moyens (32), en particulier des moyens à effet de ressort grâce auxquels le joint (35) est pressé contre le boîtier et/ou contre le moyen de transmission de rotation (15), ainsi que des seconds moyens (44) grâce auxquels le joint (35) est entraîné en rotation au moins partiellement lorsqu'on fait tourner le clapet de fermeture (5), **caractérisée en ce que** les seconds moyens (44) sont réalisés de telle sorte qu'à chaque rotation, le joint (35) est entraîné en rotation de la valeur d'un angle déterminé qui est plus petit que l'angle de rotation totale du clapet de fermeture (5), et il est de préférence prévu un toc d'entraînement relié de manière solidaire en rotation au clapet de fermeture (5), qui s'engage dans un évidement angulaire dans le joint (35) et/ou **en ce que** les seconds moyens (44) sont réalisés de telle sorte que le joint (35) n'est entraîné en rotation que dans une direction (III), et de préférence, il est prévu entre le clapet de fermeture (5) ou le moyen de transmission de rotation (15), respectivement, et le joint (35) un système du type à rochet (44, 45).

2. Vanne à clapet selon la revendication 1, **caractérisée en ce que** le moyen à effet de ressort (32) est réalisé sous forme de ressort hélicoïdal et prend appui des deux côtés sur une cuvette de ressort (32a, 34), et **en ce qu'**il est prévu des tocs d'entraînement par lesquels les cuvettes de ressort (32a, 34) sont entraînées en rotation lorsque le clapet de fermeture (5) est tourné.

3. Vanne à clapet selon l'une quelconque des revendications précédentes, **caractérisée en ce que** le joint (35) est réalisé en tant que palier à glissement pour le montage axial et/ou radial du clapet de fermeture (5).

4. Vanne à clapet selon l'une quelconque des revendications précédentes, **caractérisée en ce que** le moyen de transmission de rotation (15) présente dans la région du passage à travers l'ouverture de boîtier (31) un talon (39), et **en ce que** le joint (36) est pressé tant contre le bord (38) de l'ouverture de paroi (31) que contre ce talon (39), le talon (39) présentant de préférence une surface périphérique extérieure (40) annulaire inclinée par rapport à l'axe de rotation (II) du clapet de fermeture (5).

5. Vanne à clapet selon l'une quelconque des revendications précédentes, **caractérisée en ce que** sur le côté du clapet de fermeture (5), qui est détourné de l'ouverture (31) dans le boîtier, est prévu un palier à glissement (18) pour le clapet de fermeture.

6. Vanne à clapet selon l'une quelconque des revendications précédentes, comportant deux paliers à glissement (18, 35) agencés sur des côtés détournés l'un de l'autre du clapet de fermeture (5) et agissant au moins aussi axialement en direction de l'axe de rotation (II) du clapet de fermeture (5), **caractérisée en ce qu'**il est prévu des moyens à effet de ressort (21, 32) par lesquels les deux paliers à glissement (18, 35) sont pressés contre le clapet de fermeture (5) et contre le moyen de transmission de rotation (15), respectivement, et les moyens à effet de ressort (32) qui sont agencés sur le côté de l'ouverture (31) dans le boîtier (1) présentent de préférence une précontrainte plus grande que les moyens à effet de ressort (21) agencés de l'autre côté, et/ou au moins un moyen à effet de ressort (21, 32) est réalisé également de préférence sous forme de ressort hélicoïdal dont le diamètre intérieur libre est plus grand que le diamètre extérieur du palier à glissement (18, 35) associé et lequel ressort prend appui sur des côtés du palier à glissement (18, 35) sur un bord (23, 33), tourné vers l'extérieur, d'une cuvette à ressort (24, 34) qui reçoit le palier à glissement (18, 35).

7. Vanne à clapet selon l'une quelconque des revendications précédentes, **caractérisée en ce que** le clapet de fermeture (5) présente deux ailes (10, 11) formant l'une avec l'autre un angle (α), qui sont associées à une ouverture d'admission ou de sortie (3, 4), respectivement.

8. Vanne à clapet selon la revendication 7, **caractérisée en ce que** les deux ailes (10, 11) du clapet de fermeture (5) forment un angle (α) inférieur à 90°, en particulier d'environ 70°, et/ou **en ce qu'**en direction d'écoulement (I), un élément déflecteur d'écoulement (12) est agencé en amont du clapet de fermeture (5).

9. Vanne à clapet selon l'une quelconque des revendications précédentes, **caractérisée en ce que** la ou les ouverture(s) (3, 4) à fermer est/sont formée(s) par l'extrémité (8, 9) respective d'un tube (6, 7) conduit dans le boîtier (1), et/ou **en ce que** les surfaces d'ouverture des extrémité de tubes (8, 9) forment entre elles un angle (β) qui est deux fois plus grand que l'angle (α) formé par les deux ailes (10, 11) du clapet de fermeture (5), et dans les deux cas, le clapet de fermeture (5) ou ses deux ailes (10, 11 présentent, sur leur côté tourné vers l'extrémité de tube (8, 9), de préférence une gorge (13) respective qui est agencée et réalisée de telle sorte qu'elle reçoit l'extrémité de tube (8, 9) lors de la fermeture.

10. Vanne à clapet selon l'une des revendications 3 ou 6, **caractérisée en ce que** le boîtier (1) est fabriqué par coulée de précision, par des coques de tôle et/ou par formage sous haute pression intérieure, et/ou en ce qu'au moins un des deux paliers à glissement (18, 35) est réalisé en céramique frittée, en particulier en carbure de silicium.
